# EUROPEAN PATENT APPLICATION

(11) **EP 4 199 398 A1**
(43) Date of publication of application: **21.06.2023**
(21) Application number: 21871111.7
(22) Date of filing: 09.08.2021
(51) Int. Cl.: H04L 1/00

(54) **DATA SENDING AND RECEIVING METHODS AND TERMINALS, SYSTEM, ELECTRONIC DEVICE AND STORAGE MEDIUM**

(30) Priority: 27.09.2020 CN 202011033416
(71) Applicant: ZTE Corporation, Shenzhen, Guangdong 518057 (CN)
(72) Inventor: TAO, Kai, Shenzhen, Guangdong 518057 (CN)
(74) Representative: Zoli, Filippo
(86) International application number: PCT/CN2021/111564
(87) International publication number: WO 2022/062734

(57) **Abstract**

Data sending and receiving methods and terminals, a system, an electronic device and a storage medium. Said data sending method comprises: acquiring probabilistic shaping information and source data to be sent (S100); performing probabilistic shaping processing on a part of the source data according to the probabilistic shaping information, and obtaining shaped data and unshaped data (S200); performing interleaving processing on the shaped data and the unshaped data to obtain first-sorted first-interleaved data (S300); performing forward error correction coding processing on the first-interleaved data, and obtaining check information (S400); performing interleaving processing on the check information, and obtaining interleaved check information (S500); performing modulation processing on the interleaved check information, the shaped data and the unshaped data, and obtaining modulated symbol data (S600); and sending the modulated symbol data (S700).

## Description

### CROSS-REFERENCE TO RELATED APPLICATION

This application is filed on the basis of Chinese patent application 202011033416.5 filed September 27, 2020, and claims priority to the Chinese patent application, the entire contents of which are incorporated herein by reference.

### TECHNICAL FIELD

The present disclosure relates to the field of communication, and more particularly, to a data sending method, a data receiving method, a data sending terminal device, a data receiving terminal device, a system, an electronic device and a computer-readable storage medium.

### BACKGROUND

In a communication transmission system, input signals are subjected to probabilistic shaping to generate shaping gain, thereby reducing the average power of the signals and increasing the transmission distance of the system.

In some cases in this field, signals not subjected to probabilistic shaping and signals subjected to probabilistic shaping and mapping are interleaved by an interleaver. However, in the process of signal interleaving, the signal layout is prone to crosstalk, so that the signals cannot be effectively modulated and mapped to realize shaping gain.

### SUMMARY

Embodiments of the present disclosure provide a data sending method, a data receiving method, a data sending terminal device, a data receiving terminal device, a system, an electronic device and a computer-readable storage medium.

In accordance with an aspect of the present disclosure, an embodiment provides a data sending method. The method includes: acquiring probabilistic shaping information and source data to be sent; performing probabilistic shaping on a part of the source data according to the probabilistic shaping information to obtain shaped data and unshaped data; interleaving the shaped data and the unshaped data to obtain first interleaved data in a first order; performing forward error correction coding on the first interleaved data to obtain check information; interleaving the check information to obtain interleaved check information; modulating the interleaved check information, the shaped data and the unshaped data to obtain modulated symbol data; and sending the modulated symbol data.

In accordance with another aspect of the present disclosure, an embodiment provides a data receiving method. The method includes: acquiring modulated symbol data; demapping the modulated symbol data to obtain demapped data, the demapped data including interleaved check information and an information bit; deinterleaving the interleaved check information to obtain check information, and interleaving the information bit to obtain second interleaved data in a first order; performing forward error correction decoding on the second interleaved data and the check information to obtain third interleaved data; and deinterleaving the third interleaved data to obtain shaped data and unshaped data, and performing probabilistic deshaping on the shaped data to obtain source data.

In accordance with another aspect of the present disclosure, an embodiment provides a data sending terminal device. The terminal includes: a source data module, configured to generate source data; a probabilistic shaper, configured to perform probabilistic shaping on the source data to obtain shaped data and unshaped data; a first interleaver, configured to interleave the shaped data and the unshaped data to obtain first interleaved data in a first order; a forward error correction encoder, configured to perform forward error correction coding on the first interleaved data to obtain check information; a second interleaver, configured to interleave the check information; and a symbol modulator, configured to modulate the shaped data, the unshaped data and the check information to obtain modulated symbol data.

In accordance with another aspect of the present disclosure, an embodiment provides a data receiving terminal device. The terminal includes: a symbol demodulator, configured to demap modulated symbol data to obtain demapped data, the demapped data including interleaved check information and an information bit; a third interleaver, configured to interleave the information bit to obtain second interleaved data in a first order; a first deinterleaver, configured to deinterleave the interleaved check information to obtain check information; a forward error correction decoder configured to perform forward error correction decoding on the second interleaved data and the check information to obtain third interleaved data; a second deinterleaver, configured to deinterleave the third interleaved data to obtain shaped data and unshaped data; and a probabilistic deshaper, configured to deshape the shaped data to obtain complete source data.

In accordance with another aspect of the present disclosure, an embodiment provides a system. The system includes: the data sending terminal device and/or the data receiving terminal device provided in the above aspect.

In accordance with another aspect of the present disclosure, an embodiment provides an electronic device. The electronic device includes: a memory, storing a computer program; and a processor configured to execute the computer program in the memory to implement the data sending method and/or the data receiving method in the above embodiment.

In accordance with another aspect of the present disclosure, an embodiment provides a computer-readable storage medium, storing a computer-executable instruction which when executed by a processor, causes the processor to implement the data sending method and/or perform the data receiving method provided in the above aspect.

Other features and advantages of the present disclosure will be set forth in the following description, and partly become obvious from the description, or understood by implementing the present disclosure. The objects and other advantages of the present disclosure can be realized and obtained by the structure particularly pointed out in the description, claims and, accompanying drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and do not constitute a limitation to the technical schemes of the present disclosure.
Fig. 1 is a flowchart of a data sending method according to an embodiment of the present disclosure;
Fig. 2A is a constellation point probability distribution diagram of a standard 16 QAM constellation graph according to an embodiment of the present disclosure;
Fig. 2B is a constellation point probability distribution diagram of a 16 QAM constellation graph after probabilistic shaping according to an embodiment of the present disclosure;
Fig. 3 is a comparison diagram of rate adaptability and performance of a different coding modulation scheme according to an embodiment of the present disclosure;
Fig. 4 is a flowchart of a data sending method according to another embodiment of the present disclosure;
Fig. 5 is a schematic frame diagram of a data sending terminal device according to an embodiment of the present disclosure;
Fig. 6 is a schematic frame diagram of a data receiving terminal device according to an embodiment of the present disclosure; and
Fig. 7 is a schematic frame diagram of a communication data transmission system according to an embodiment of the present disclosure.

### Reference numerals:

100. Data sending terminal device; 110. Source data module; 120. Probabilistic shaper; 121. Probabilistic shaping distribution matcher; 122. First data memory; 130. First interleaver; 140. Forward error correction encoder; 150. Second interleaver; 160. Symbol modulator; 170. Second data memory; 200. Data receiving terminal device; 210. Symbol demodulator; 220. Third interleaver; 230. First deinterleaver; 240. Forward error correction decoder; 250. Second deinterleaver; 260. Probabilistic deshaper; 261. Probabilistic shaping distribution dematcher; 262.Third data memory; 270. Data receiver.

### DETAILED DESCRIPTION

In order to make the objects, technical schemes and advantages of the present disclosure clear, the present disclosure will be further described in detail in conjunction with the drawings and embodiments. It should be understood that the specific embodiments described here are only used to illustrate the present disclosure, and are not intended to limit the present disclosure. The embodiments in the present disclosure and the features in the embodiments may be arbitrarily combined with each other if not in collision.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In some cases in this field, signals are coded and modulated to reduce the transmission power consumption per unit information, thus reducing information transmission costs of a communication system.

Probabilistic Constellation Shaping (PCS) can reduce the occurrence probabilities in sequence from inside to outside by adjusting occurrence probabilities of bits corresponding to amplitudes of constellation points, while ensuring that the relative positions of all constellation points in a Quadrature Amplitude Modulation (QAM) constellation graph remain unchanged, thereby reducing the average power.

However, after signals are subjected to probabilistic shaping and Forward Error Correction (FEC) coding, in the process of signal interleaving, the signal layout is prone to crosstalk, so that corresponding constellation mapping and modulation cannot be performed on signal data.

For example, in some embodiments, the difficulties of jointly designing probabilistic shaping and FEC coding/decoding are as follows: 1) The introduction of the probabilistic shaping technology requires the data sent to a modulation module to be divided into data not subjected to probabilistic shaping and data subjected to probabilistic shaping and mapping, where the data not subjected to probabilistic shaping corresponds to modulated symbol bits, and the data subjected to probabilistic shaping and mapping corresponds to modulated amplitude bits; 2) in order to shuffle burst errors introduced by a channel and improve the decoding performance, an FEC encoder/decoder usually needs to operate cooperatively with an interleaver, but the interleaver shuffles the data not subjected to probabilistic shaping and the data subjected to probabilistic shaping and mapping to confuse the data, and according to the confused data, a desired constellation point distribution cannot be obtained, that is, the shaping gain cannot be produced.

In view of the above, according to the data sending method/receiving method and terminal, system, electronic device and computer-readable storage medium provided by the embodiments of the present disclosure, signals are laid out in a preset mode in the process of signal interleaving, thus the signals can be effectively modulated and mapped to realize shaping gain.

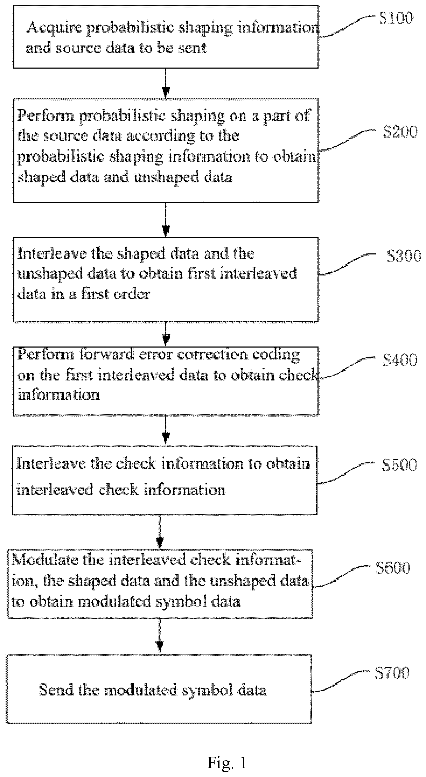

In an aspect, a data sending method is provided. Referring to Fig. 1, in some embodiments, the data sending method includes following steps: S100, acquiring probabilistic shaping information and source data to be sent; S200, performing probabilistic shaping on a part of the source data according to the probabilistic shaping information to obtain shaped data and unshaped data; S300, interleaving the shaped data and the unshaped data to obtain first interleaved data in a first order; S400, performing forward error correction coding on the first interleaved data to obtain check information; S500, interleaving the check information to obtain interleaved check information; S600, modulating the interleaved check information, the shaped data and the unshaped data to obtain modulated symbol data; and S700, sending the modulated symbol data.

By performing probabilistic shaping on the source data to be sent, bits representing low energy in the source data have a higher occurrence probability than bits representing high energy, thus modulating occurrence probabilities of constellation points. It can be understood that by adjusting the occurrence probabilities of the constellation points, an average transmission power of signals can be reduced to reduce the damage caused by noise to the signals.

The data sending method may be applied to a data sending terminal device in the communication system, and the average transmission power of signals can be reduced by means of the above data transmission method to reduce the damage caused by noise to the signals. The data sending terminal device may transmit data to the data receiving terminal through a communication transmission channel.

By modulating the interleaved check information, the shaped data and the unshaped data to obtain modulated symbol data, the interleaved data is prevented from being used as data to be mapped.

In some cases in this field, the interleaved data formed by interleaving the shaped data and the unshaped data is generally used as data to be mapped, but the interleaving easily causes sorting disorder of the shaped data and the unshaped data, so that target modulated symbol data cannot be obtained.

For example, the shaped data corresponds to amplitude bits of the modulated symbol data, and the unshaped data corresponds to symbol bits of the modulated symbol data. Because the shaped data and the unshaped data are interleaved, an original data sorting order is scrambled. Therefore, in the modulation process, the disordered source data will cause the distribution of the obtained modulated symbol data to be inconsistent with preset parameters, so that the signals cannot be shaped to obtain shaping gain.

In the embodiment of the present disclosure, uninterleaved shaped data and unshaped data are used as data to be mapped, and the check information obtained by performing forward error correction coding on the shaped data and unshaped data is added to the data to be mapped, so as to add error correction codes to the symbol bits of the modulated symbol data. By adding the error correction codes to the data to be mapped, the burst error codes introduced by the communication transmission channel are shuffled, thus improving the decoding capability of the communication system. By reducing data interleaving, data confusion is avoided, and signals can be effectively modulated and mapped, to realize shaping gain.

In some embodiments, the probabilistic shaping information includes one or more of a probabilistic shaping degree parameter, a probabilistic shaping type parameter, a modulation parameter, and a forward error correction coding parameter. By presetting the probabilistic shaping information, adjustment parameters of the source data are defined. For example, by presetting the probabilistic shaping degree parameter and the probabilistic shaping type parameter, a shaping degree and shaping of the source data by probabilistic shaping are adjusted; by presetting the forward error correction coding parameter, it is determined to perform forward error correction coding on the first interleaved data to correct error codes in the first interleaved data; and by presetting the modulation parameter, a modulation scheme of modulating the source data is determined.

The probabilistic shaping information is preset and adjusted according to a sending environment of the source data, so that probabilistic shaping, forward error correction coding and modulation can be performed on the source data through quick invoking of the parameters.

For example, by performing forward error correction coding, a redundant part is added to the source data, so that a limited number of error codes are allowed to present in the transmitted data in data processing, and the limited number of error codes are usually corrected, so that data can be correctly identified by the communication system without retransmitting the data.

In some embodiments, performing probabilistic shaping on a part of the source signal data according to the probabilistic shaping information includes: determining unit data amount of the source signal data and amount of data to be shaped in the unit data amount of the source signal data according to the modulation parameter and the forward error correction coding parameter; and performing probabilistic shaping on a part of the source signal data according to the probabilistic shaping information and the amount of data to be shaped.

For example, according to the forward error correction coding parameter, a codeword length of the data obtained after performing forward error correction coding on the first interleaved data is obtained; according to the modulation parameter, a specific modulation type of the modulation is determined; according to the codeword length and the specific modulation type, the unit data amount of source signal data and the amount of data to be shaped in the unit data amount of the source signal data are determined.

By modulating the unit data amount of the source signal data and the amount of data to be shaped in the unit data amount of the source signal data, a net information rate in the communication system can be flexibly modulated, an optical signal-to-noise tolerance of the communication system is increased, and a signal transmission distance is increased.

According to the probabilistic shaping degree parameter, the probabilistic shaping type parameter and the amount of data to be shaped in the probabilistic shaping information, probabilistic shaping is performed on a part of the source signal data. Part of the source data subjected to probabilistic shaping may correspond to check symbol bits in the output data.

In some embodiments, modulating the interleaved check information, the shaped data and the unshaped data to obtain modulated symbol data includes: modulating the interleaved check information, the shaped data and the unshaped data according to a preset symbol mapping rule to obtain modulated symbol data, where the preset symbol mapping rule includes that: the shaped data corresponds to amplitude bits of the modulated symbol data, and the unshaped data and the interleaved check information correspond to symbols bit of the modulated symbol data.

The interleaved check information, the shaped data and the unshaped data are mapped according to a preset mapping rule to obtain modulated symbol data laid out according to a preset rule. For example, the shaped data is mapped into amplitude bits of the modulated symbol data according to a preset mapping rule, and the unshaped data and the interleaved check information are mapped into symbol bits of the modulated symbol data according to a preset mapping rule.

In some embodiments, the modulation is Quadrature Amplitude Modulation (QAM). QAM is performed on the interleaved check information, the shaped data and the unshaped data according to a preset mapping rule to obtain modulated symbol data conforming to a preset rule.

By means of the QAM, which is a vector modulation, input bits are mapped to a complex plane (constellation) (generally adopting Gray code) to form plural modulated symbols; and I and Q components (corresponding to a real part and an imaginary part of the complex plane, that is, a horizontal direction and a vertical direction) of the symbols are amplitude-modulated to correspond to two carriers (cosat and sinαt) orthogonal in time domain respectively, so as to improve the spectrum utilization rate.

For example, for a 16-QAM signal with 16 sampling points, each sampling point represents one vector state, so the 16-QAM has 16 vector states, and every 4-bit binary number specifies one of the 16 vector states. It can be understood that 16 combinations of carriers and phases are specified in the 16-QAM. In practical application scenarios, the more sampling points of a QAM signal, the higher its transmission efficiency. According to different data transmission requirements, the number of sampling points in the QAM signal can be adjusted. The QAM signal may include 16-QAM (16 sampling points) to 1024-QAM (1024 sampling points).

In combination with the above embodiments, a specific embodiment will be illustrated adaptively.

By presetting the probabilistic shaping information, adjustment parameters of the source data are defined. For example, by presetting the probabilistic shaping degree parameter and the probabilistic shaping type parameter, the shaping degree and shaping of the source data by probabilistic shaping are adjusted; by presetting the forward error correction coding parameter, it is determined to perform forward error correction coding on the first interleaved data to correct error codes in the first interleaved data; and by presetting the modulation parameter, a modulation scheme of modulating the source data is determined.

A probabilistic shaper performs probabilistic shaping on a part of the source data to be subjected to probabilistic shaping according to the probabilistic shaping degree parameter and the probabilistic shaping type parameter to obtain shaped data and unshaped data. A first interleaver interleaves the data obtained by the probabilistic shaper to obtain first interleaved data sorted in a preset first order.

A forward error correction encoder performs forward error correction coding on the first interleaved data to obtain check information; a second interleaver interleaves the check information to obtain interleaved check information; a symbol modulator modulates the interleaved check information, the shaped data and the unshaped data to obtain modulated symbol data, and transmits the modulated symbol data to a communication receiving terminal through a communication transmission channel.

According to the data sending method provided in an aspect, by performing probabilistic shaping on the source data to be sent, bits representing low energy in the source data have a higher occurrence probability than bits representing high energy, thereby modulating occurrence probabilities of constellation points. By reducing data interleaving of the shaped data and the unshaped data, data confusion caused by the interleaving of the unshaped data and the unshaped data is avoided, thus ensuring that constellation mapping and modulation can be effectively performed on the source data to realize shaping gain. In addition, by controlling the data input rate of a symbol modulator, the net rate of the communication system can be flexibly adjusted.

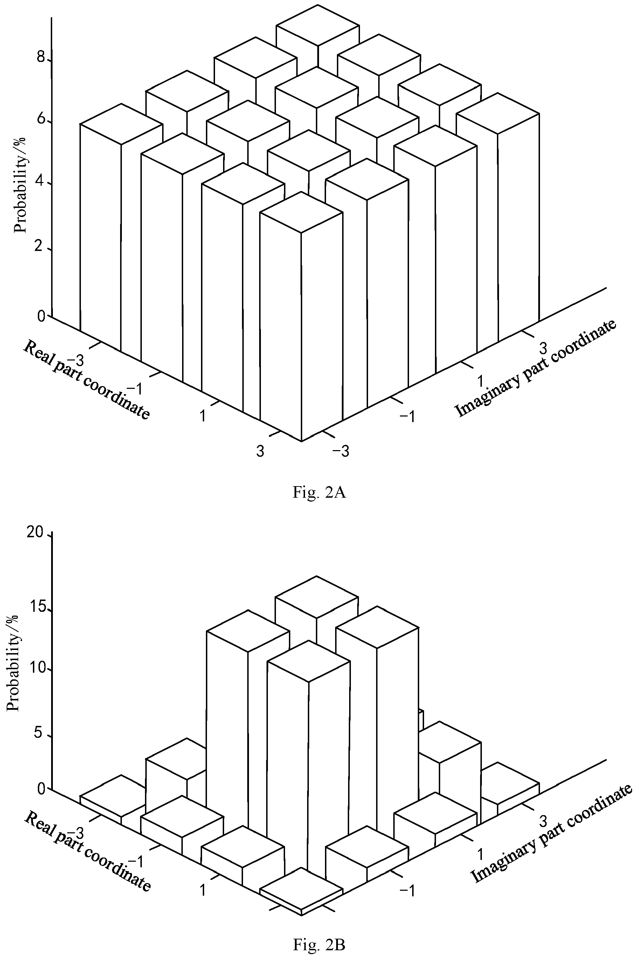

Referring to Fig. 2A and Fig. 2B, Fig. 2A is a constellation point probability distribution diagram of a standard 16 QAM constellation graph, and Fig. 2B is a constellation point probability distribution diagram of a 16 QAM constellation graph after probabilistic shaping, where the plane coordinate represents position, and the vertical coordinate represents constellation point probability.

It can be seen from the comparison of the figures that by adjusting occurrence probabilities of bits corresponding to amplitudes of constellation points, the occurrence probabilities are reduced in sequence from inside to outside while ensuring that the relative positions of all the constellation points in the QAM constellation remain unchanged, thus reducing the average power.

Every 4 data bits are mapped into one symbol, where every 2 data bits are mapped to represent a real part or an imaginary part of one constellation point. That is, half of the bit data to be modulated for 16 QAM mapping is used to represent symbol bits, and the other half is used to represent amplitude bits. The bit data representing amplitude bits comes from the source data subjected to probabilistic shaping, and the bit data representing symbol bits comes from the source data not subjected to probabilistic shaping and the check data generated by forward error correction coding.

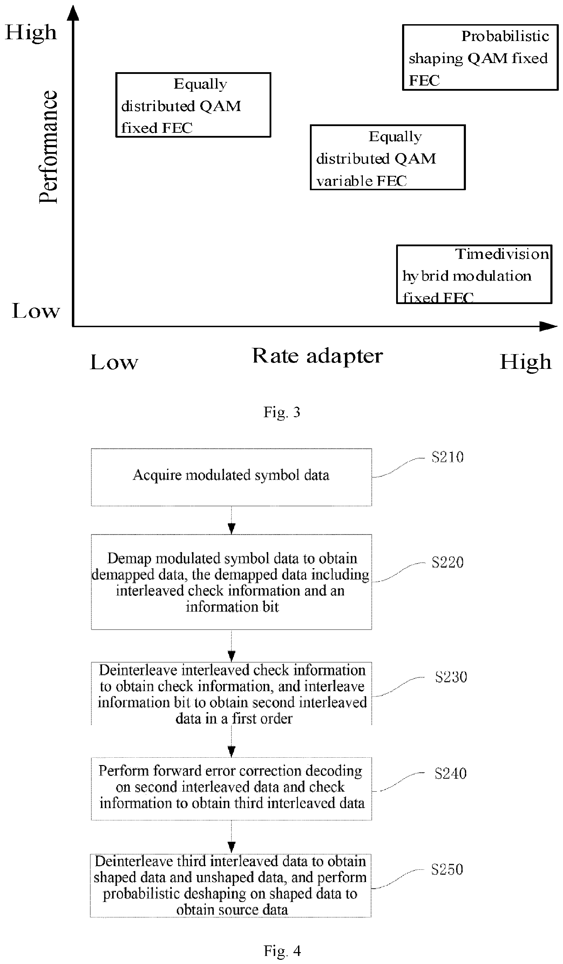

Referring to Fig. 3, QAM represents constellation mapping, and FEC represents forward error correction. In the figure, the horizontal coordinate represents rate adaptability, and the vertical coordinate represents performance. As can be seen from the figure, through the constellation mapping of probabilistic shaping and the fixed forward error correction, high performance can be achieved while enabling the data to have high rate adaptability.

In addition, types of constellation mapping and forward error correction may be adaptively selected according to rate adaptability and performance requirements.

In another aspect, a data receiving method is provided. Referring to Fig. 4, in some embodiments, the data receiving method includes the following steps: S210, acquiring modulated symbol data; S220, demapping the modulated symbol data to obtain demapped data, the demapped data including interleaved check information and an information bit; S230, deinterleaving the interleaved check information to obtain check information, and interleaving the information bit to obtain second interleaved data in a first order; S240, performing forward error correction decoding on the second interleaved data and the check information to obtain third interleaved data; and S250, deinterleaving the third interleaved data to obtain shaped data and unshaped data, and performing probabilistic deshaping on the shaped data to obtain source data.

The received modulated symbol data is demapped to obtain demapped data, the demapped data including interleaved check information and an information bit. The interleaved check information is deinterleaved to obtain the check information obtained through the forward error correction coding by a communication sending terminal; and the information bits are interleaved to obtain second interleaved data in a first order, thereby obtaining second interleaved data matching a preset order. The second interleaved data in the first order is matched with the order of the first interleaved data in the communication sending terminal. By interleaving the information bits, error codes introduced by the communication transmission channel in the information bits are discretized.

Forward error correction decoding is performed on the second interleaved data and the check information to obtain third interleaved data, the third interleaved data is deinterleaved to obtain shaped data and unshaped data, and probabilistic deshaping is performed on the shaped data to obtain source data. For example, amplitude bits in the third interleaved data correspond to the shaped data, and symbol bits in the third interleaved data correspond to the unshaped data.

In some embodiments, demapping includes different decision mapping modes. When the demapping is hard decision demapping, demapping the modulated symbol data to obtain demapped data includes: performing hard decision demapping on the modulated symbol data to obtain demapped data which is a hard decision value of a unit data bit; when the demapping is soft decision demapping, demapping the modulated symbol data to obtain demapped data includes: performing soft decision demapping on the modulated symbol data to obtain demapped data which is a log-likelihood ratio of a unit data bit. Different decision demapping modes are selected to adapt to different communication environments, and decision demapping is performed on the modulated symbol data according to a corresponding decision mode.

The demapped data is represented by a hard decision value or log-likelihood ratio, so that the data receiving method can meet the processing accuracy requirements of different data transmission systems.

For example, by performing hard decision demapping, the demapped data output by demapping is subjected to limited N-bit quantization. By presetting a threshold value, when the modulated symbol data is higher than the threshold value, an output result is judged as 1; and when the modulated symbol data is lower than the threshold value, the output result is judged as 0. That is, the demapped data is a hard decision value of a unit data bit in the modulated symbol data.

If the demapping is soft decision demapping, soft decision demapping is performed on the modulated symbol data to obtain demapped data. The unmapped data is a log-likelihood ratio of a unit data bit. For example, the modulated symbol data is quantized by a symbol demodulator to obtain a log-likelihood ratio of each unit data bit corresponding to the modulated symbol data. The modulated symbol data is replaced by the log-likelihood ratio, and the log-likelihood ratio is used as decoding source data for decoding, to reduce decoding error probabilities of symbol data units and/or symbol data groups.

In combination with the above embodiments, a specific embodiment will be illustrated adaptively.

The symbol demodulator receives modulated symbol data and demaps the modulated symbol data to obtain demapped data. The interleaver interleaves the information bits in the demapped data to obtain second interleaved data in a first order, and a deinterleaver deinterleaves the interleaved check information in the demapped data to obtain check information. A forward error correction decoder performs forward error correction decoding according to the second interleaved data and the check information to obtain third interleaved data. A deinterleaver deinterleaves the third interleaved data to obtain shaped data and unshaped data. A probabilistic deshaper is configured to deshape the shaped data to obtain corresponding source data.

The deinterleaver deinterleaves the data generated by the forward error correction decoder to restore the unshaped data and the shaped data. The probabilistic deshaper deshapes the shaped data to obtain part of the source data, and transmits the part of the source data and the unshaped data to a sink for integration to obtain complete source data.

Therefore, according to the data sending method provided in this aspect, the shaped data, the unshaped data and the check information in the modulated symbol data are correspondingly interleaved or deinterleaved, so as to be sorted according to a preset rule. The deinterleaver deinterleaves the data generated by the forward error correction decoder to restore the unshaped data and the shaped data. The probabilistic deshaper deshapes the shaped data to obtain part of the source data, and transmits of the part of the source data and the unshaped data to a sink for integration to obtain complete source data.

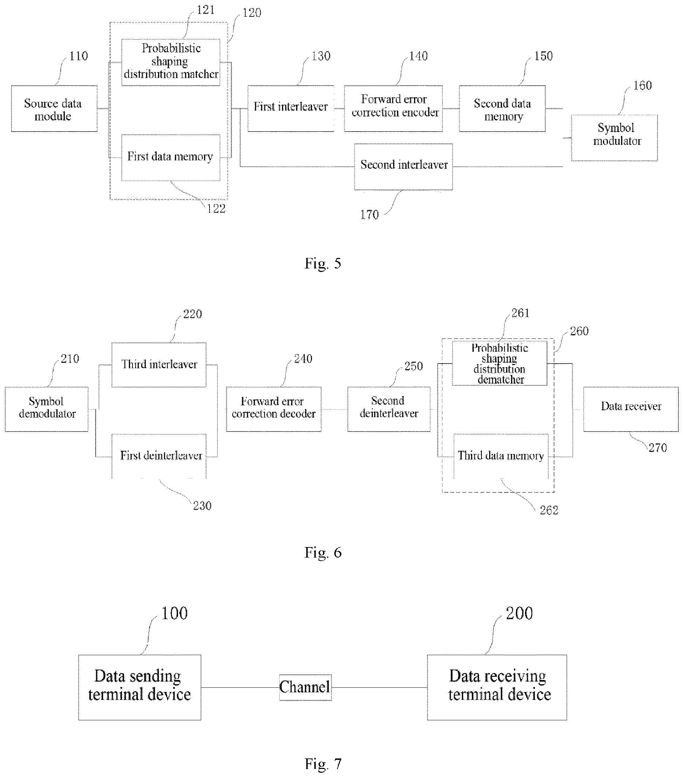

In another aspect, a data sending terminal device 100 is provided. Referring to Figs. 5 and 7, in some embodiments, the data sending terminal device 100 may be a communication sending terminal in a communication system. The data sending terminal device 100 includes: a source data module 110, configured to generate source data; a probabilistic shaper 120, configured to perform probabilistic shaping on the source data to obtain shaped data and unshaped data; a first interleaver 130, configured to interleave the shaped data and the unshaped data to obtain first interleaved data in a first order; a forward error correction encoder 140, configured to perform forward error correction coding on the first interleaved data to obtain check information; a second interleaver 150, configured to interleave the check information; and a symbol modulator 160, configured to modulate the shaped data, the unshaped data and the check information to obtain modulated symbol data.

The data sending terminal device is used as a communication sending terminal to perform probabilistic shaping on the source data to obtain shaped data and unshaped data. The first interleaver 130 interleaves the shaped data and the unshaped data according to a preset order, to obtain first interleaved data in a first order. The shaped data corresponds to amplitude bits of the modulated symbol data, and the unshaped data corresponds to symbol bits of the modulated symbol data.

The forward error correction encoder 140 performs forward error correction coding on the first interleaved data to obtain check information; and the check information is transmitted to the second interleaver 150 for interleaving by the second interleaver 150to obtain interleaved check information.

Thereafter, the symbol modulator 160 receives the shaped data, the unshaped data and the check information, and modulates the input data according to a preset mapping rule to obtain modulated symbol data. The shaped data corresponds to amplitude bits of the modulated symbol data, and the unshaped data and the check information correspond to symbol bits of the modulated symbol data. It can be understood that, according to the preset mapping rule, the shaped data is mapped into amplitude bits of the modulated symbol data, and the unshaped data and the check information are mapped into symbol bits of the modulated symbol data.

In some embodiments, the probabilistic shaper 120 includes: a probabilistic shaping distribution matcher 121, configured to perform probabilistic shaping on a part of the source data to obtain shaped data and unshaped data; and a first data memory 122, communicatively connected with the source data module 110, and configured to store the unshaped data.

The source data may be preliminarily divided into a part to be shaped and a part not to be shaped. The first data memory 122 is communicatively connected with the source data module 110, receives and stores the part of source data not to be shaped from the source data module 110, and inputs the part of source data not to be shaped as unshaped data into the first interleaver 130. The probabilistic shaping distribution matcher 121 performs probabilistic shaping on a part of the source data (the part of source data to be shaped) and generates shaped data. The probabilistic shaping distribution matcher 121 is communicatively connected with the first interleaver 130, and transmits the shaped data to the first interleaver 130. The first interleaver 130 interleaves the unshaped data and the shaped data to make the unshaped data and the shaped data sorted in a preset first order.

In some embodiments, the data sending terminal device 100 further includes a second data memory 170 communicatively connected with the symbol modulator 160, and configured to store the shaped data and the unshaped data. The second data memory 170 is communicatively connected with the probabilistic shaper 120 to receive the data output by the probabilistic shaper 120. The second data memory 170 stores the shaped data and the unshaped data output by the probabilistic shaper 120, and transmits cached data of the second data memory 170 to the symbol modulator 160.

In some embodiments, the second data memory 170 is used for caching the part of data to be modulated. By controlling the output rate of the second data memory 170 to control the signal input rate at an input end of the symbol modulator 160, the net information rate of the communication system can be flexibly adjusted.

Therefore, according to the data sending terminal device provided in this aspect of the embodiment of the present disclosure, a preset data transmission terminal interleaves, codes and modulates the source data, to quickly process the source data, so that high performance can be achieved while enabling the data to have high rate adaptability.

In another aspect, a data receiving terminal device 200. Referring to Figs. 6 and 7, in some embodiments, the data receiving terminal device 200 may be a communication receiving terminal in a communication system. The data receiving terminal device 200 includes: a symbol demodulator 210, configured to demap the modulated symbol data to obtain demapped data, the demapped data including interleaved check information and information bits; a third interleaver 220, configured to interleave the information bits to obtain second interleaved data in a first order; a first deinterleaver 230, configured to deinterleave the interleaved check information to obtain check information; a forward error correction decoder 240, configured to perform forward error correction decoding on the second interleaved data and the check information to obtain third interleaved data; a second deinterleaver 250, configured to deinterleave the third interleaved data to obtain shaped data and unshaped data; and a probabilistic deshaper 260, configured to deshape the shaped data to obtain complete source data.

The communication terminal in this embodiment may be used as the communication receiving terminal 200 in the communication system. The modulated symbol data in the communication transmission channel is received by the communication terminal, and is decoded to obtain source data.

For example, the symbol demodulator 210 demaps the modulated symbol data received by the communication terminal to obtain demapped data. The third interleaver 220 interleaves information bits in the demapped data to obtain second interleaved data in a first order. The first deinterleaver 230 deinterleaves the interleaved check information in the demapped data to obtain check information. The forward error correction decoder 240 performs forward error correction decoding on the second interleaved data and the check information to obtain third interleaved data. The second deinterleaver 250 deinterleaves the third interleaved data to obtain shaped data and unshaped data. The probabilistic deshaper 260 deshapes the shaped data to obtain part of the source data. The unshaped data and the part of the source data are integrated to obtain complete source data.

Forward error correction decoding is performed to correct error codes generated by data in the communication transmission channel, and the data obtained after performing forward error correction decoding is transmitted to the second deinterleaver 250. The second deinterleaver 250 deinterleaves the data generated by the forward error correction decoder 240 to restore the unshaped data and the shaped data. The probabilistic deshaper 260 deshapes the shaped data to obtain part of the source data, and transmits the part of the source data and the unshaped data to a sink for integration to obtain complete source data.

In some embodiments, the probabilistic deshaper 260 includes: a probabilistic shaping distribution dematcher 261, configured to deshape the shaped data to obtain unshaped source data; and a third data memory 262, configured to store the unshaped data.

The probabilistic shaping distribution dematcher 261 is communicatively connected with the second deinterleaver 250, and the probabilistic shaping distribution dematcher 261 deshapes the shaped data from the second interleaver 150 to obtain part of the source data. The sink obtains complete source data according to the unshaped data and the part of the source data corresponding to the shaped data, to complete the decoding of the modulated symbol data.

Therefore, according to the data receiving terminal device provided in this aspect of the embodiment of the present disclosure, the received modulated symbol data is deinterleaved and decoded by a preset data receiving architecture to restore the modulated symbol data received from the channel to obtain source data.

In another aspect, a system is provided. Referring to Fig. 7, in some embodiments, the system includes the data sending terminal device 100 in any one of the above embodiments and/or the data receiving terminal device 200 in any one of the above embodiments.

A communication transmission channel is provided between the data sending terminal device 100 and the data receiving terminal device 200, and the data receiving terminal device 200 and the data sending terminal device 100 exchange communication data through the communication transmission channel.

By performing probabilistic shaping on the source data to be sent by the data receiving terminal device 200, bits representing low energy in the source data have a higher occurrence probability than bits representing high energy, thus modulating occurrence probabilities of constellation points. It can be understood that by adjusting the occurrence probabilities of the constellation points, the average transmission power of signals can be reduced to reduce the damage caused by noise to the signals. The modulated symbol data is received by the data receiving terminal device 200, and is decoded to obtain source data.

The forward error correction encoder 140 generates check information to insert check bits in the symbol bits of the modulated symbol data. The forward error correction decoder 240 performs forward error correction decoding on the second interleaved data and the check information to correct the error codes introduced by transmission of data in the communication transmission channel, thereby restoring the source data sent by the data transmission terminal 100.

In another aspect, an electronic device is provided. In some embodiments, the electronic device includes: a memory, storing a computer program; and a processor configured to execute the computer program in the memory to implement: the steps of the data sending method in any one of the above embodiments; and/or the steps of the data receiving method in any one of the above embodiments. In some embodiments, the computer-readable storage medium stores a computer-executable instruction which, when executed by a processor, causes the processor to implement:
the data sending method in any one of the above emobodiments;
   and/or
the data receiving method in any one of the above emobodiments.

In another aspect, in some embodiments, provided is a computer-readable storage medium, storing a computer-executable instruction which, when executed by a processor, causes the processor to implement: the data sending method in any one of the above embodiments; and/or the data receiving method in any one of the above embodiments.

In the embodiment of the present disclosure, by means of the data sending method in the embodiment of the present disclosure, signals are laid out in a preset mode in the process of signal interleaving, thus the signals can be effectively modulated and mapped to realize shaping gain, and the transmission performance of the communication system can be optimized.

The device embodiments described above are merely illustrative, and the units described as separate component waveguides may or may not be physically separated, that is, the units may be located in one place, or may be distributed onto multiple network elements. Some or all of the modules may be selected according to actual needs to achieve the purpose of this embodiment.

The above is a detailed description of some embodiments of the present disclosure, but the present disclosure is not limited to the above embodiments. Those having ordinary skills in the art can also make various equivalent modifications or substitutions without violating the scope of the present disclosure, and these equivalent modifications or substitutions are all included in the scope defined by the claims of the present disclosure.

## Claims

1. A data sending method, comprising:
acquiring probabilistic shaping information and source data to be sent;
performing probabilistic shaping on a part of the source data according to the probabilistic shaping information to obtain shaped data and unshaped data;
interleaving the shaped data and the unshaped data to obtain first interleaved data in a first order;
performing forward error correction coding on the first interleaved data to obtain check information;
interleaving the check information to obtain interleaved check information;
modulating the interleaved check information, the shaped data and the unshaped data to obtain modulated symbol data; and
sending the modulated symbol data.

2. The data sending method of claim 1, wherein the probabilistic shaping information comprises one or more of a probabilistic shaping degree parameter, a probabilistic shaping type parameter, a modulation parameter and a forward error correction coding parameter.

3. The data sending method of claim 2, wherein performing probabilistic shaping on a part of the source signal data according to the probabilistic shaping information comprises:
determining unit data amount of the source signal data and amount of data to be shaped in the unit data amount according to the modulation parameter and the forward error correction coding parameter; and
performing probabilistic shaping on the part of the source data according to the probabilistic shaping information and the amount of data to be shaped.

4. The data sending method of any one of claims 1 to 3, wherein modulating the interleaved check information, the shaped data and the unshaped data comprises:
modulating the interleaved check information, the shaped data and the unshaped data according to a preset symbol mapping rule to obtain the modulated symbol data,
wherein the preset symbol mapping rule comprises that: the shaped data corresponds to an amplitude bit of the modulated symbol data, and the unshaped data and the interleaved check information correspond to a symbol bit of the modulated symbol data.

5. The data sending method of claim 4, wherein the modulation is Quadrature Amplitude Modulation (QAM).

6. A data receiving method, comprising:
acquiring modulated symbol data;
demapping the modulated symbol data to obtain demapped data, the demapped data comprising interleaved check information and an information bit;
deinterleaving the interleaved check information to obtain check information, and interleaving the information bit to obtain second interleaved data in a first order;
performing forward error correction decoding on the second interleaved data and the check information to obtain third interleaved data; and
deinterleaving the third interleaved data to obtain shaped data and unshaped data, and performing probabilistic deshaping on the shaped data to obtain source data.

7. The data receiving method of claim 6, wherein:
the demapping is hard decision demapping;
correspondingly, demapping the modulated symbol data to obtain demapped data comprises:
performing hard decision demapping on the modulated symbol data to obtain information to be modulated which is a hard decision value of a unit data bit; or
the demapping is soft decision demapping;
correspondingly, demapping the modulated symbol data to obtain demapped data comprises:
performing soft decision demapping on the modulated symbol data, wherein the information to be modulated is a log-likelihood ratio of a unit data bit.

8. A data sending terminal device, comprising:
a source data module configured to generate source data;
a probabilistic shaper configured to perform probabilistic shaping on the source data to obtain shaped data and unshaped data;
a first interleaver configured to interleave the shaped data and the unshaped data to obtain first interleaved data in a first order;
a forward error correction encoder configured to perform forward error correction coding on the first interleaved data to obtain check information;
a second interleaver configured to interleave the check information; and
a symbol modulator configured to modulate the shaped data, the unshaped data and the check information to obtain modulated symbol data.

9. The data sending terminal device of claim 8, wherein the probabilistic shaper comprises:
a probabilistic shaping distribution matcher configured to shape part of the source data to obtain shaped data and unshaped data; and
a first data memory communicatively connected with the source data module, and configured to store the unshaped data.

10. The data sending terminal device of claim 9, wherein the data sending terminal device further comprises:
a second data memory communicatively connected with the symbol modulator, and configured to store the shaped data and the unshaped data.

11. A data receiving terminal device, comprising:
a symbol demodulator configured to acquire modulated symbol data, and demap the modulated symbol data to obtain demapped data, the demapped data comprising interleaved check information and an information bit;
a third interleaver configured to interleave the information bit to obtain second interleaved data in a first order;
a first deinterleaver configured to deinterleave the interleaved check information to obtain check information;
a forward error correction decoder configured to perform forward error correction decoding on the second interleaved data and the check information to obtain third interleaved data;
a second deinterleaver configured to deinterleave the third interleaved data to obtain shaped data and unshaped data; and
a probabilistic deshaper configured to deshape the shaped data to obtain complete source data.

12. The data receiving terminal device of claim 11, wherein the probabilistic deshaper comprises:
a probabilistic shaping distribution dematcher configured to deshape the shaped data to obtain unshaped source data; and
a third data memory configured to store the unshaped data.

13. A system, comprising: the data sending terminal device of any one of claims 8 to 10 and/or the data receiving terminal device of any one of claims 11 to 12.

14. An electronic device, comprising: a memory storing a computer program; and a processor configured to execute the computer program in the memory to perform:
the steps of the data sending method of any one of claims 1 to 5;
and/or
the steps of the data receiving method of any one of claims 6 to 7.

15. A computer-readable storage medium, storing a computer-executable instruction which, when executed by a processor, causes the processor to perform:
the data sending method of any one of claims 1 to 5;
and/or
the data receiving method of any one of claims 6 to 7.
